# EUROPEAN PATENT APPLICATION

(11) **EP 1 569 094 A1**
(43) Date of publication of application: **31.08.2005**
(21) Application number: 04251156.8
(22) Date of filing: 27.02.2004
(51) Int. Cl.: G06F 9/44, G06F 3/033

(54) **System and method for interactive wireless applications with conditional UI controls**

(71) Applicant: Research In Motion Limited, Ontario N2L 3W8 (CA)
(72) Inventor: Vitanov, Kamen B., Toronto Ontario M6P 2P4 (CA); Shenfield, Michael, Richmond Hill Ontario L4C 3S9 (CA); Fritsch, Brindusa L., Toronto Ontario M9C 2J9 (CA); Goring, Bryan R., Milton Ontario L9T 5V4 (CA); Bibr, Viera, Kilbride Ontario L0P 1G0 (CA)
(74) Representative: Rickard, David John

(57) **Abstract**

A wireless application GUI is described as a set of atomic screen components. The application screens are defined through a structured language such as XML, HTML or XHTML and are expressed as a collection of nested layouts and UI controls. Representation of these visual components is facilitated through the use of an intelligent Device Runtime framework that provides a set of services for screen presentation, management and user interaction. The designation of the screen components provides for an interactive and dynamic UI, and provides for delegation of some of the user interface management to the intelligent Device Runtime framework. The screen components utilize conditional controls in the wireless application definition. Conditional controls are dynamic screen elements that determine their appearance or behavior by virtue of satisfying a particular condition. Conditional controls include so-called driving (primary) and dependent (secondary) controls that modify application runtime screen behavior.

## Description

### BACKGROUND OF THE INVENTION

This application relates generally to presentation of applications on a user interface of a wireless device.

There is a continually increasing number of wireless devices in use today, such as mobile telephones, PDAs with wireless communication capabilities, and two-way pagers. Software applications which run on these devices increase their utility. For example, a mobile phone may include an application which retrieves the weather for a range of cities, or a PDA may include an application that allows a user to shop for groceries. These software applications take advantage of the connectivity to a network in order to provide timely and useful services to users. However, due to the restricted resources of some devices, and the complexity of delivering large amounts of data to the devices, developing software applications for a variety of devices remains a difficult and time-consuming task.

Currently, devices are configured to communicate with Web Services through Internet based Browsers and/or native applications. Native applications have the advantage of being developed specifically for the type of device platform, thereby providing a relatively optimized application program for each runtime environment. However, native applications have disadvantages of not being platform independent, thereby necessitating the development of multiple versions of the same application, as well as being relatively large in size, thereby taxing the memory resources of the device. Further, application developers need experience with programming languages such as Java and C++ to construct these hard coded native applications. There is a need for application programs that can be run on client devices having a wide variety of runtime environments, as well as having a reduced consumption of device resources.

It is desirable to provide the maximum degree of flexibility in defining component screens of a wireless application that manage the application presentation on a user interface (UI) of a wireless device. Other desires include; offering users and developers of wireless applications effective presentation of information, providing an interactive and dynamic UI, and delegating the vast majority of user interface management to an intelligent Device Runtime. A typical scenario encountered in designing screens for wireless applications is one in which the appearance or value of one control can be affected by another control within the screen. Providing this feature allows the definition of more complex screens with rich functionality, however, can also increase the complexity and therefore storage requirements of the application on the wireless device.

The systems and methods disclosed herein provide a conditional controls environment to obviate or mitigate at least some of the above presented disadvantages.

### SUMMARY OF THE INVENTION

A typical scenario encountered in designing screens for wireless applications is one in which the appearance or value of one control can be affected by another control within the screen. Providing this feature allows the definition of more complex screens with rich functionality, however, can also increase the complexity and therefore storage requirements of the application on the wireless device. Contrary to present presentation systems and methods, the application GUI is described as a set of atomic screen components. The application screens are defined through a structured language such as XML, HTML or XHTML and are expressed as a collection of nested layouts and UI controls. Representation of these visual components is facilitated through the use of an intelligent Device Runtime framework that provides a set of services for screen presentation, management and user interaction. The designation of the screen components provides for an interactive and dynamic UI, and provides for delegation of some of the user interface management to the intelligent Device Runtime framework. The screen components utilize conditional controls in the wireless application definition. Conditional controls are dynamic screen elements that determine their appearance or behavior by virtue of satisfying a particular condition. Conditional controls include so-called driving (primary) and dependent (secondary) controls that modify application runtime screen behavior.

According to the present invention there is provided a wireless device having an intelligent execution framework for executing a wireless application, the application having atomic screen components expressed in a structured definition language, the device comprising: a screen manager of the framework for generating a screen model from the screen components, the screen model configured for modeling a screen representation including a set of conditional controls having at least one primary control and at least one secondary control; a user interface for providing an interactive environment between a user of the device and the application; and a user interface service of the framework for providing the screen representation to the user interface;
wherein the user interacts with the conditional controls displayed on the user interface during execution of the application.

According to a further aspect of the present invention there is provided a method for executing a wireless application by an intelligent execution framework of a wireless device, the application having atomic screen components expressed in a structured definition language, the method comprising the steps of: extracting the screen components from a memory, the screen components including a set of conditional controls having at least one primary control and at least one secondary control; creating a screen model from the screen components including the conditional controls, the screen model configured for modeling a screen representation for display on a user interface of the device for providing an interactive environment between a user of the device and the application; and generating the screen representation based on the screen model, the screen representation configured to reflect current values of user interface conditions corresponding to an execution state of the application; wherein the user interacts with the conditional controls displayed on the user interface during execution of the application.

According to a still further aspect of the present invention there is provided a computer program product for configuring a wireless device to have an intelligent execution framework for executing a wireless application, the device having a user interface for providing an interactive environment between a user of the device and the application, the application having atomic screen components expressed in a structured definition language, the computer program product comprising: a computer readable medium; a screen manager module of the framework stored on the computer readable medium for generating a screen model from the screen components, the screen model configured for modeling a screen representation including a set of conditional controls having at least one primary control and at least one secondary control; and a user interface service module stored on the computer readable medium of the framework for providing the screen representation to the user interface; wherein the user interacts with the conditional controls displayed on the user interface during execution of the application.

According to a still further aspect of the present invention there is provided a wireless device having an intelligent execution framework for executing a wireless application, the application having atomic screen components expressed in a structured definition language, the device comprising: means for extracting the screen components from a memory, the screen components including a set of conditional controls having at least one primary control and at least one secondary control; means for creating a screen model from the screen components including the conditional controls, the screen model configured for modeling a screen representation for display on a user interface of the device for providing an interactive environment between a user of the device and the application; and means for generating the screen representation based on the screen model, the screen representation configured to reflect current values of user interface conditions corresponding to an execution state of the application; wherein the user interacts with the conditional controls displayed on the user interface during execution of the application.

### BRIEF DESCRIPTION OF THE DRAWINGS

These and other features will become more apparent in the following detailed description in which reference is made to the appended drawings by way of example only, wherein:
Figure 1 is a block diagram of a wireless device;
Figure 2 is a block diagram of a device runtime framework of the device of Figure 1;
Figure 3 is a further view of a screen manager service of the framework of Figure 2;
Figure 4 is an example screen representation of the application on a user interface of the device of Figure 1;
Figure 5 is an example implementation of conditional controls of the application program of Figure 2;
Figure 6 is a further example implementation of conditional controls of the application of Figure 1;
Figure 7 is a further example implementation of conditional controls of the application of Figure 1;
Figure 8 is a further example implementation of conditional controls of the application of Figure 1;
Figure 9 is a further example implementation of conditional controls of the application of Figure 1;
Figure 10 is a further example implementation of conditional controls of the application of Figure 1;
Figure 11 is a further example implementation of conditional controls of the application of Figure 1;
Figure 12 shows an operation of the screen manager of Figure 3 providing an initial screen representation; and
Figure 13 shows an operation of the screen manager of Figure 3 providing a screen update as a result of user event.

### DESCRIPTION OF THE PREFERRED EMBODIMENTS

### Device Environment

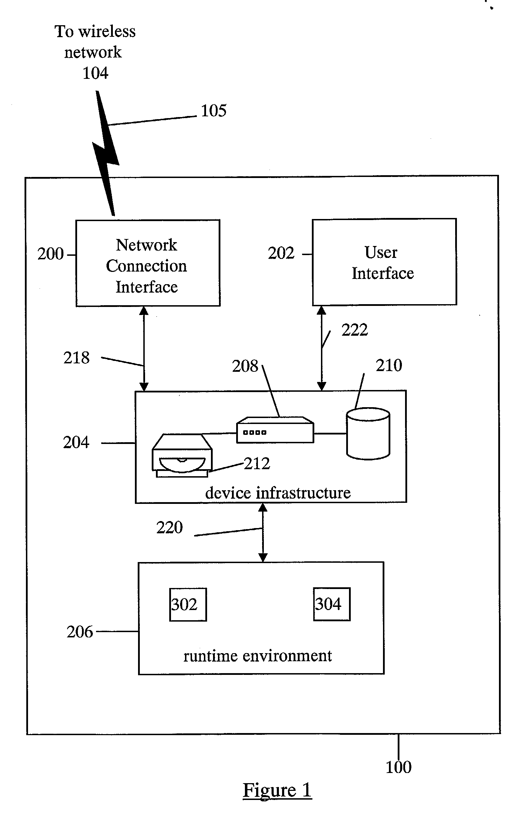

Referring to Figure 1, a wireless device 100 transmits and receive requests/response messages 105, respectively, when in communication with a wireless network 104. The device 100 can operate, for example as web clients of a web services (not shown) connected to the network 104 by using the requests/response messages 105 in the form of message header information and associated data content, for example requesting and receiving product pricing and availability from an on-line merchant. The web service is an example of a system with which client application programs 302, executed by an intelligent runtime environment framework 206 of the device 100, interact via the wireless network 104 in order to provide utility to users of the device 100. The application programs 302 of the device 100 can use the business logic of the web service similarly to calling a method on an object (or a function). It is recognized that the client application program 302 can be downloaded/uploaded via the network 104 directly to the devices 100. It is further recognized that the devices 100 can communicate with one or more web services via the network 104.

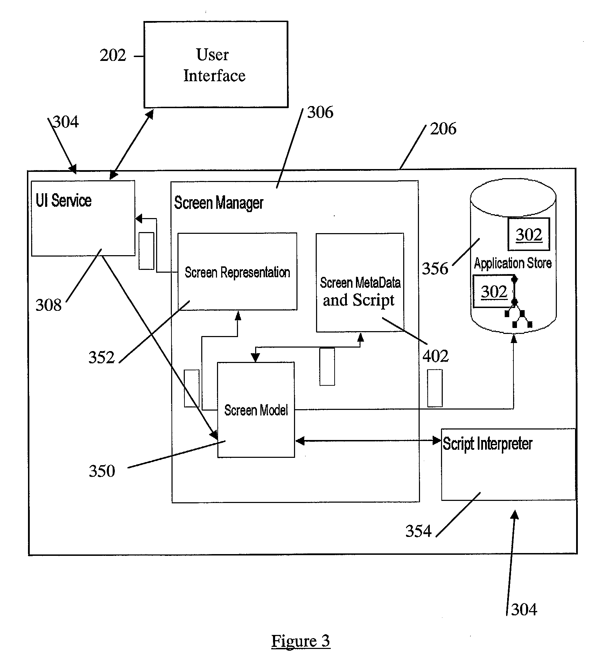

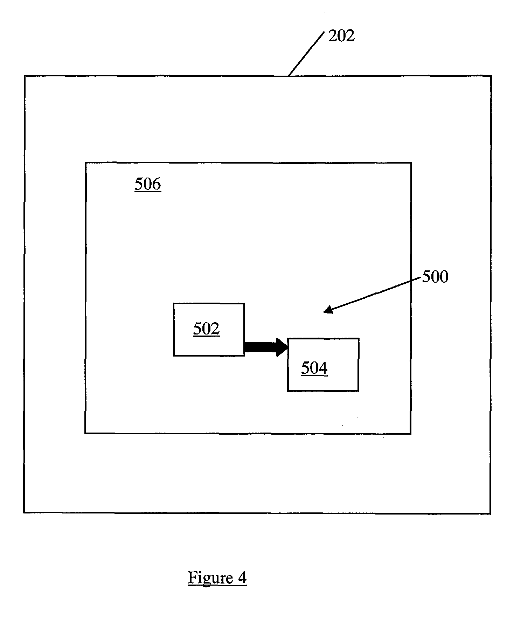

The wireless applications 302 are such that the application GUI is described as a set of atomic screen components 402 (see Figure 3). Application screens presented on a user interface 202 are defined through a structured definition language such as XML, HTML or XHTML and are expressed as a collection of nested layouts and UI controls 500 (see Figure 4), further described below. Representation of these visual components 402 is facilitated through the use of an intelligent Device Runtime framework 206 that provides a set of services 304 for screen presentation, management and user interaction.

### Communication Device

Referring again to Figure 1, the device 100 is such as but not limited to mobile telephones, PDAs, two-way pagers or dual-mode communication devices. The device 100 include a network connection interface 200, such as a wireless transceiver, coupled via connection 218 to a device infrastructure 204. The connection interface 200 is connectable during operation of the device 100 to the wireless network 104, such as by wireless links (e.g., RF, IR, etc.), which enables the device 100 to communicate with other devices 100 and with external systems (such as the web service) via the network 104 and to coordinate the requests/response messages 105 between the client application programs 302 and the external systems. The network 104 supports the transmission of data in the requests/response messages 105 between device 100 and external systems, which are connected to the network 104. The network 104 may also support voice communication for telephone calls between the device 100 and devices 100 which are external to the network 104. A wireless data transmission protocol can be used by the wireless network 104, such as but not limited to DataTAC, GPRS or CDMA.

Referring again to Figure 1, the device 100 also has the user interface 202, coupled to the device infrastructure 204 by connection 222, to interact with a user (not shown). The user interface 202 can include one or more user input devices such as but not limited to a QWERTY keyboard, a keypad, a trackwheel, a stylus, a mouse, a microphone and the user output device such as an LCD screen display and/or a speaker. If the screen is touch sensitive, then the display can also be used as the user input device as controlled by the device infrastructure 204. The user interface 202 is employed by the user of the device 100 to coordinate the requests/response messages 105 over the network 104, as well as execution of the application 302 on the device 100 through user actions.

Referring again to Figure 1, operation of the device 100 is enabled by the device infrastructure 204. The device infrastructure 204 includes the computer processor 208 and the associated memory module 210. The computer processor 208 manipulates the operation of the network interface 200, the user interface 202 and the framework 206 of the communication device 100 by executing related instructions, which are provided by an operating system and client application programs 302 located in the memory module 210. Further, it is recognized that the device infrastructure 204 can include a computer readable storage medium 212 coupled to the processor 208 for providing instructions to the processor and/or to load/update client application programs 302 in the memory module 210. The computer readable medium 212 can include hardware and/or software such as, by way of example only, magnetic disks, magnetic tape, optically readable medium such as CD/DVD ROMS, and memory cards. In each case, the computer readable medium 212 may take the form of a small disk, floppy diskette, cassette, hard disk drive, solid state memory card, or RAM provided in the memory module 210. It should be noted that the above listed example computer readable mediums 212 can be used either alone or in combination.

### Framework of Device

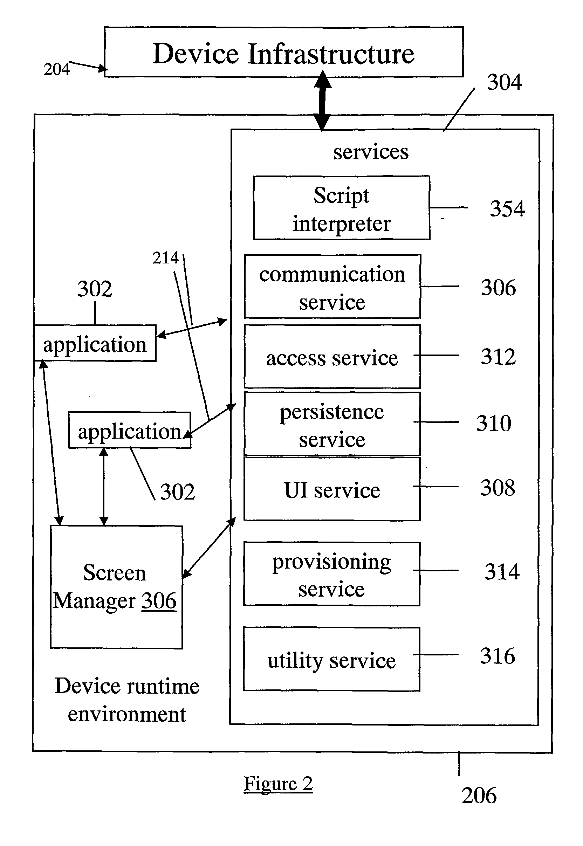

Referring to Figures 1 and 2, the framework 206 of the device 100 is coupled to the device infrastructure 204 by the connection 220. The client runtime environment the device 100 is provided by the framework 206, and is preferably capable of generating, hosting and executing the client application programs 302 (which include atomic screen/presentation components 402, further defined below, expressed in a structured definition language - see Figure 3). The device runtime can be thought of as an intelligent software framework 206 that provides a set of basic services to manage and execute typical application 302 behavior (e.g. persistence, messaging, screen navigation and display). Therefore, framework 206 provides the native client runtime environment for the client application programs 302 and is an interface to the device 100 functionality of the processor 208 and associated operating system of the device infrastructure 204. The framework 206 provides the runtime environment by preferably supplying a controlled, secure and stable environment on the device 100, in which the application programs 302 execute. The framework 206 also has a screen manager 306, which can be defined as a service that manages a screen model 350 (see Figure 3) from metadata generated in relation to the application 302. The screen manager 306 also handles modelling of all conditional controls and layouts used by the application via the user interface 202 (see Figure 1), and updates (either continuously or periodically) the model 350 based on events received from a UI Service 308.

Referring to Figure 2, the framework 206 provides framework services 304 (a standard set of generic services) to the client application programs 302, in the event certain services are not included as part of the application 302 or received as separate components (not shown) as part of the application program 302. The application program 302 has communications 214 with the framework services 304, as needed. The framework services 304 of the framework 206 coordinate communications via the connection 220 with the device infrastructure 204. Accordingly, access to the device infrastructure 204, user interface 202 and network interface 200 can be provided to the client application programs 302 by the framework 206 and associated services 304. It is recognized that a portion of the operating system of the device infrastructure 204 (see Figure 2) can represent the any of the framework services 304.

The framework services 304 can include such as but not limited to a communication service 306, the UI service 308, a persistence service 310, an access service 312, a provisioning service 314 and a utility service 316. The communication service 306 manages connectivity between the component application programs 302 and the external system 10, such as the messages 105 and associated data sent/received in respect to the web service on behalf of the applications 302. The UI service 308 manages the representation of the application programs 302 as they are output on the output device of the user interface 202 (see Figure 1), as provided by the screen manager 306. The persistence service 310 allows the application programs 302 to store data in the memory module 210 (see Figure 1) of the device infrastructure 204. The access service 312 provides the component application programs 302 access to other software applications which are present on the communication device 100. The provisioning service 314 manages the provisioning of software applications on the communication device 100. Application provisioning can include requesting and receiving new and updated application programs 302, configuring application programs 302 for access to services which are accessible via the network 104, modifying the configuration of application programs 302 and services, and removing application programs 302 and services. The utility service 316 is used to accomplish a variety of common tasks, such as performing data manipulation in the conversion of strings to different formats.

It is recognized that the framework services 304 of the communication device 100 can provide functionality to the application programs 302, which can include the services described above. Further, the framework services 304 can be integrated with the application 302 rather than provided as a separate framework 304. In any event, the component application programs 302 can have access to the functionality of the communication device 100 through integrated and/or separate framework services 304,as further described below.

Referring to Figure 3, the capability to address conditional (driving and dependent) controls 500 (see Figure 4), further described below, is provided in connection with the application 302 through use of the intelligent Device Runtime framework 206. The framework 206 is responsible for modelling and presenting screens as described through the structured definition language used to express the application (e.g. such as but not limited to XML based languages). The framework 206 also manages interaction with the user of the application 302 and processes changes to the current screen model 350 as a result of user interface 202 events. The framework 206 can have an application store 356 for use as a device 100 repository for application 302 definitions and generated data. As described above, the UI service 308 provides the visualization of screen representations 352 of the application 302 in the native UI framework 206 of the device 100. The UI service 308 also feeds user events from the user interface 202 into the screen manager 306. The framework services 304 also has a Script Interpreter 354 for executing script portions of the application 302 (such as but not limited to ECMAScript) and has the ability to manipulate the current screen model 350 through interaction with the Screen Manager 306.

### Conditional Controls 500

Referring to Figure 4, the concept of conditional controls 500 is included in the application 302 definition. Conditional controls 500 are dynamic screen elements of the user interface 202 that determine their appearance or behavior by virtue of satisfying a particular condition. The conditional controls 500 include primary or driving controls 502 and dependent or secondary controls 504 that modify application 302 runtime screen behavior through interaction with the screen manager 306. In general, the driving or primary control 502 is a UI control 500 whose value affects the value or appearance of another control (the dependent/secondary control 504). The dependent control is a UI control 500 whose value or appearance is determined based on the value of another control (the driving/primary control 502). The relationships between driving 502 and dependent 504 controls are further described below.

It is highly desirable to be able to define screen components 402 in such a way that they behave dynamically, and offer the maximum capability to defer processing and presentation logic to the intelligent Device Runtime framework 206. Referring again to Figures 3 and 4, the most elementary application screen representation 352 consists of a static arrangement of layouts 506 and nested controls 500 that are displayed on the user interface 202 the same way regardless of runtime factors. This approach is satisfactory for basic applications 302. To produce more complex screen representations 352 that mutate based on dynamically changing criteria, conditional controls 500 can be included in the application 302 definition via screen components 402. By introducing conditional controls 500 by the screen manager 306 in the screen model 350 of the screen components 402 defined in the application 302, the exact appearance/behavior of the screen representation 352 on the user interface 202 is deferred to runtime criteria managed by the intelligent Device Runtime 206.

There are two specializations of conditional controls 500, namely:
- the dependent controls 504 and
- the driving controls 502
where in general, the control 500 may be such as but not limited to a UI type control such as a button, editbox, label, menu item, or a layout type control. The relationship between the driving 502 and dependent 504 controls, and how it determines runtime appearance of screen presentations 352 on the interface 202 is described below, in addition to the capability to affect control 500 and layout 506 visualization from script elements.

Dependent/secondary controls 504 are those that evaluate their state based on a change in another controls 500 (including primary 502 and other linked secondary controls 504). The dependent control 504 state may include:
- control value;
- appearance; and
- visibility.
Dependent controls 504 specify validating conditions that determine their characteristics. These conditions may be expressed through script (such as ECMAScript) and/or through the application 302 structured definition language (e.g. XML). Driving/primary controls 502 are those whose state affects the properties of the linked dependent control 504. A change in state of the driving control 502 triggers evaluation of the dependent control's 504 validating condition(s). The driving control 502 state may include:
- control value;
- appearance; and
- visibility.

In regard to conditional navigation of various linked screens of the screen representation 352, controls 500 that specify screen navigation may also be specified as dependent controls 504. The resultant effect of this specification is that of dynamic navigation paths throughout the application. Two types of controls are well suited to this task are
- on screen buttons and
- menu items.
There are three general approaches to specifying driving/dependent controls 500:
- **screen definition metadata** which describes the driving/dependent relationship through screen metadata (e.g. XML) that defers logic to the capabilities of the Device Runtime framework 206;
- **driving control script/code** which associates custom script elements to driving control and can specify dependent control appearance through script code;
- **extended screen metadata/dependent script/code** which defines the conditional relationship through screen metadata such that the dependent control 504 evaluates script to determine appearance; and
- **dependent script/code condition** where there is no driving control 502 such that the control 504 specifies its own condition for display through a script.
It is recognized that the script (code/elements) may be specified as distinct elements within the application 302 structured definition language or may be interspersed with the screen component 402 definition. In any event, the screen manager 306 monitors the extraction of the metadata/script from the application definition and generates the screen model 350 through processing of the screen metadata/script obtained as screen components 402 from the application 302.

### Example A: Screen Metadata defined driving/dependent relationships (in XML)

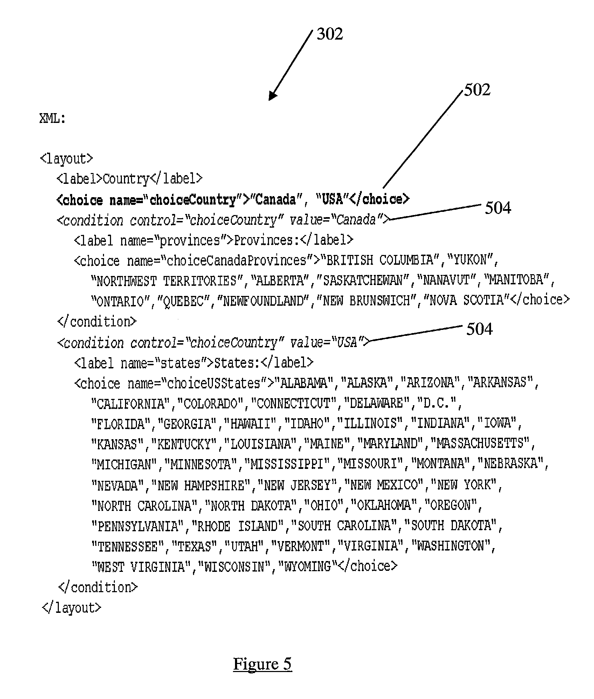

The appearance of driving 502 and dependent 504 controls may be specified exclusively through the XML (structured definition language) of the application 302. In the sample XML code of Figure 5, the aim is to offer the capability to display either US states or Canadian provinces based on whether the user has declared they are in USA or Canada. The driving control 502, shown in bold, is the choice control *choiceCountry*. The dependent controls 504 are linked to, and reevaluated, when the *choiceCountry* control changes. As depicted, the elements associated to the choice of Canada present Canadian provinces. When the *choiceCountry* value is determined to be USA, American states are displayed. This approach has the advantage that all logic required to implement the appearance is deferred to the intelligent Device Runtime framework 206 through interpretation of the screen components 402 by the screen manager 306.

### Example B: Driving control script

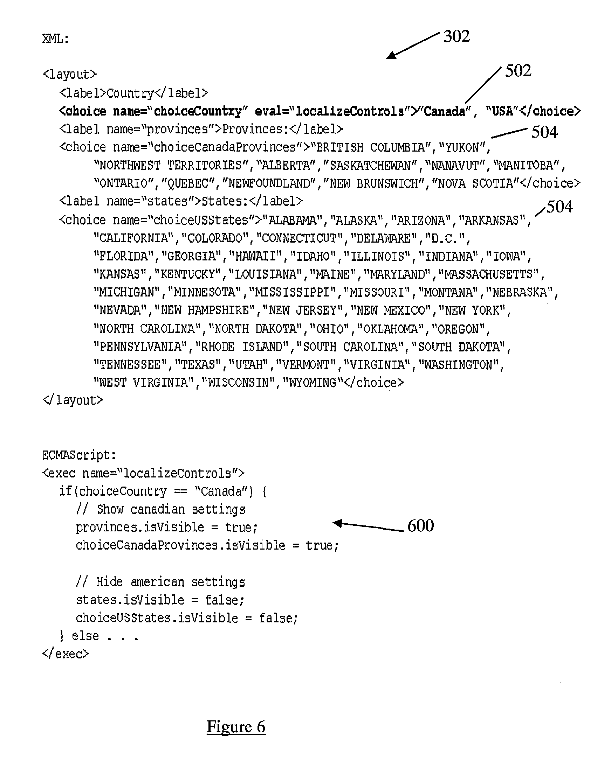

Referring to Figure 6, an alternate method of manipulating conditional controls 500 is through a custom script portion 600 attached to the application 302. In the sample application as described above in Example A, the driving 502 choice control *choiceCountry* specifies an executable script (here shown as an ECMAscript fragment by example only) to be evaluated when a change of selection occurs. In this configuration, the dependent relationship is associated to the script called *localizeControls*. When called, the script determines which controls 500 of the screen on the interface 202 (see Figure 4) are made visible to the user based on the current state of *choiceCountry*. This script mechanism illustrates an alternate method of linking driving 502 and dependent 504 controls whereby the display logic is specified by the application developer of the application 302.

### Example C: Extended screen metadata/dependent script

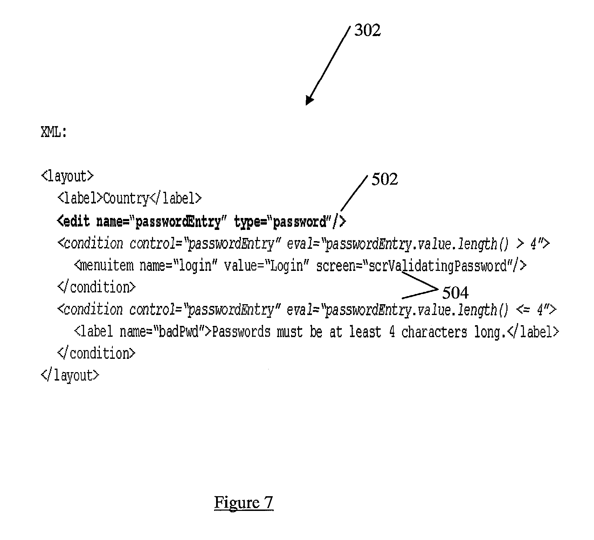

The following example in Figure 7 shows how the driving control 502 may affect the re-evaluation of dependent controls 504 whereby the dependent control 504 specifies its own criteria for display. This criteria may be specified as a separate code section, or as shown in this example, as an inline evaluation. In the sample application 302, the *passwordEntry* edit field represents the driving control 502. Changes to the edit field trigger re-evaluation of the conditional controls specified through the XML. The specification of the dependent controls 504 further refine the application 302 behaviour by evaluating a boolean condition. In the sample provided, a password length is determined to be of minimum length prior to adding a menuitem to transition to the next page of the screen representation displayed on the interface 202 (see Figure 1). Failure to satisfy the condition of minimum length forces a warning label to be displayed by the user interface 202.

### Example D: Dependent script condition

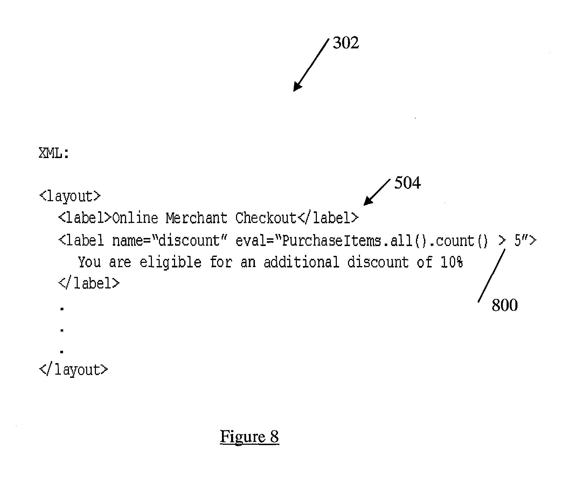

In this example shown in Figure 8, there is no driving control 502 specified. The "dependent" control 504 in this instance specifies its own script to evaluate. Evaluation of the script element will gate display of the control 504. The script may be referenced as a function local to the application 302 XML, or may be an inline script. As shown, the *discount* label is not tied to any driving control 502. The *discount* label includes an ECMAScript fragment 800 that determines if the minimum number of items are selected to be eligible for additional discount.

### Example E: Conditional navigation through XML

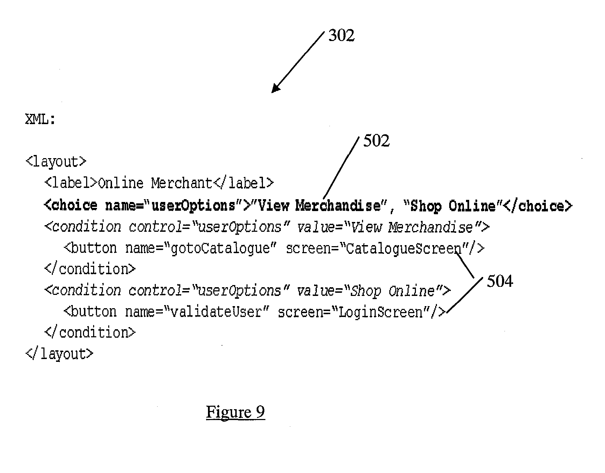

In the previous examples, conditional navigation is illustrated through the expression of application defined dependent 504 and driving 502 controls. In the sample navigation shown in Figure 9, navigation to the next merchant page is determined by selection of the driving 502 *userOptions* choice. When the selection is changed, one of two dependent 504 buttons may be displayed. The *gotoCatalogue* button 504 is shown when no user validation is required. When "Shop Online" is selected, the user is presented with the *validateUser* button 504. The next screen of the screen representation 352 (see Figure 4) that the application 302 can display is changed dynamically by user selection through the specification of the dependent control 504.

### Conditional Layouts 506

Referring to Figure 4, layouts 506 can be special controls 500 that affect the arrangement of nested UI controls 504. It is recognized that layouts 506 can also be dependent controls 504 that are affected by a driving condition control 502. The following properties of the layout 506 may be conditional, such as but not limited to:
- visibility;
- layout type; and
- style and colors.

As layouts are parent controls 502 for those contained UI controls 504 or dependent layouts 506, there is a rule to resolve conflict of state with embedded controls 500. For example, a situation may arise whereby a conditional layout 506 is determined to be invisible, but a nested control 504 within the layout 506 is visible. In this situation, the rule is that the dependent control 504 observes its driving control's 502 visibility when compatible with the enclosing parents visibility (summarized in Table 1). The visibility relationship stated in the table 1 portrays the ability to nest controls ie. Controls in layouts, layouts in layouts, and how to handle conflicting visibility state. The rule is that the parent controls visibility always gates the visibility of the nested control

**Table 1:**

| Rules for determining visibility of nested controls | | |
|---|---|---|
| dependent control | parent control | show dependent |
| invisible | invisible | NO |
| invisible | visible | NO |
| visible | invisible | NO |
| visible | visible | YES |

### Bryan, is this table correct?

### Example F: Dependent layout controls through application XML

Referring to Figure 4, layouts 506 may be specified to be dependent upon a driving control 502 in the same fashion as with UI controls 500. Referring to the Example A given above, the ability to show US states or Canadian provinces based on the state of country choice is readdressed via dependent layout 506 control of the visibility of nested controls 500 through dependent conditional layouts 506.

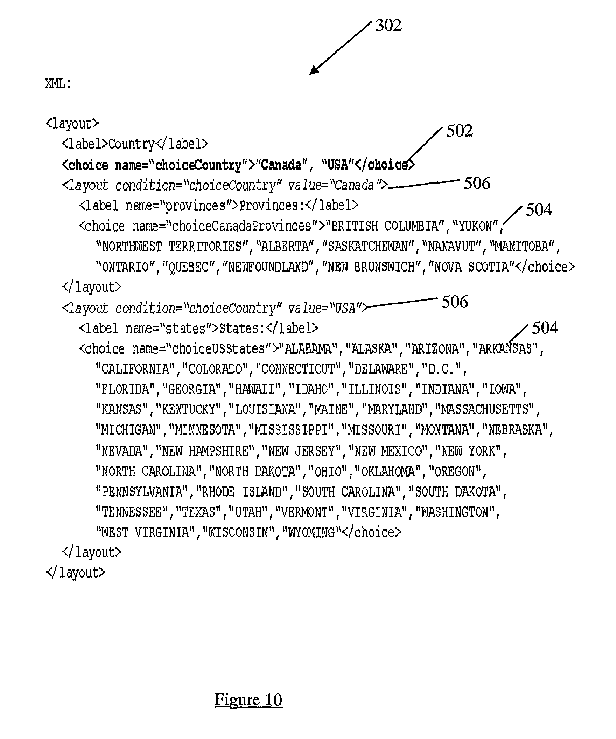

Referring to Figure 10, in this example F, the driving control 502 *choiceCountry* affects the decision of which of the two associated layouts 506 will be displayed on the user interface 202 (see Figure 1). Each layout 506 links to the *choiceCountry* driving control 502 and specifies its own value attribute controlling its display. The dependent controls 504 of each layout 506 do not specify their own visibility status through conditions, so are assumed to be visible. According to the rules of Table 1, any visible dependent controls 504 defer to the driving controls visibility status. The net effect is that only one of the two sets of nested controls will be displayed.

### Example G: Script based manipulation of layout 506 properties

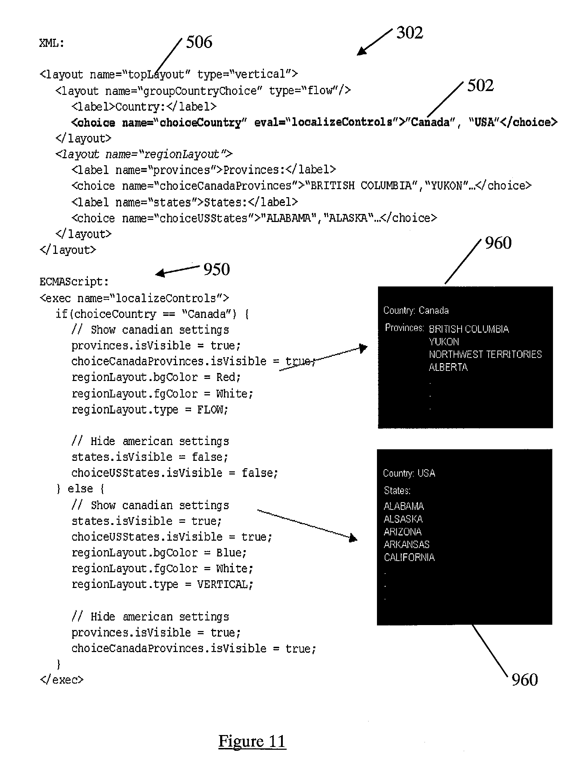

In this example G shown in Figure 11, some additional properties of the layout 506 are modified, including style and layout type. The evaluation of script 950 attached to the driving control 502 *choiceCountry* is triggered whenever the *choiceCountry* control 502 is changed. Based on the current value of that control 502, the layout 506 properties can be customized by the script for a unique view 960 on the user interface 202 (see Figure 1). The example shows a sample application 302 with XML definition of the layouts 506 and controls 502,504, and ECMAScript 950 function *localizecontrols.* In this sample, the selection of "Canada" results in a flow layout 506 arrangement of the label and province choice settings. The background and foreground colors are manipulated. When the country selection is "USA" the layout 506 orientation places the dependent controls 504 in a vertical arrangement.

### Operation of the Screen Manager to effect conditional controls

The capability to address conditional (driving and dependent) controls 502, 504 for the application 302 is provided through use of the intelligent Device Runtime framework 206. Referring to Figures 3 and 4, the framework 206 is responsible for modelling the controls 500 and layout 506 through the screen model 350, and presenting the resultant screen representation 352 generated from the model 350 to the user interface 202 (see Figure 1). The screen model 350 is described through application 302 metadata/script as screen components 402, which are extracted from the definitions of the application 302. The framework 206 also manages interaction with the user of the application 302 via the user interface 202 and processes changes to the current screen model 350 as a result of UI 202 events.

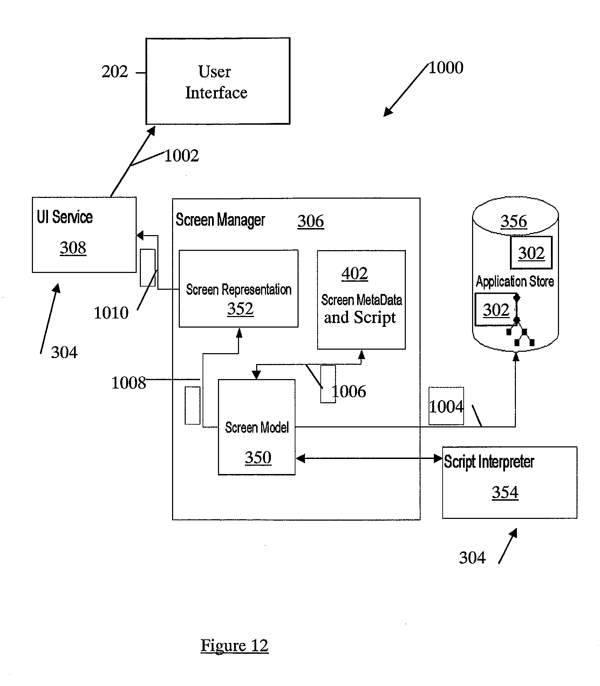

Referring to Figure 12, operation 1000 describes a resultant initial screen loading (at step 1002) of the screen representation 352 on the user interface 202 by the UI service 308. First, at step 1004 the application screen components 402 are extracted from the Application Store 356 by the screen manager 306 as application metadata/script to then generate (at step 1006) the screen model 350, which provides the reference screen metadata/script representation. The screen manager 302 then extrapolates (at step 1008) from the screen model 350 the current screen representation 352, including all current field values and settings and reflecting the current state of screen conditions for display on the user interface 202. The screen manager 306 then passes (at step 1010) the current screen representation 352 to the UI service 308 for visualization on the interface via step 1002.

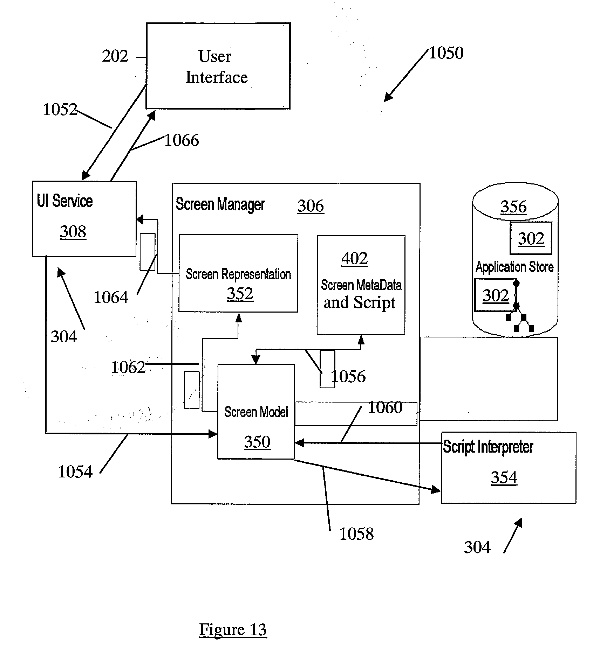

Referring to Figure 13, operation 1050 is given for interactions resulting from a change in one or more of the screen native controls 500 (by the user) of the current screen representation 352 on the interface 202. This may result in the re-evaluation of any dependent controls 504 (see Figure 4) if this change is for the linked driving control 502. At step 1052 the change in controls 500 is noted by the UI service 308. At step 1154, the change event is notified to the Screen Model 350 by the UI service 308. At step 1056, the Screen Model 350 validates the nature of the event over the internal screen metadata representation provided by the screen components 402 and detects any driving/dependent controls 500 affected as a result of the UI event by virtue of any conditional control relationships specified entirely through application 302 metadata. At step 1058, the Screen Model 350 detects if the UI change requires any script processing to occur. This may result either from a driving control 502 or a dependent control 504 specifying the necessary script processing. If so, then at step 1060 the Script Interpreter 354 modifies the Screen Model 350 as specified in the script. At step 1162, the screen representation 352 is updated by the screen manager 306 according to the updated screen model 350. At step 1064, the updated representation 352 is passed to the UI Service 308 for visualization to the user interface at step 1066.

Although the disclosure herein has been drawn to one or more exemplary systems and methods, many variations will be apparent to those knowledgeable in the field, and such variations are within the scope of the application. For example, although XML and a subset of ECMAScript are used in the examples provided, other languages and language variants may be used to define the applications 302.

## Claims

1. A wireless device having an intelligent execution framework for executing a wireless application, the application having atomic screen components expressed in a structured definition language, the device comprising:
a screen manager of the framework for generating a screen model from the screen components, the screen model configured for modeling a screen representation including a set of conditional controls having at least one primary control and at least one secondary control;
a user interface for providing an interactive environment between a user of the device and the application; and
a user interface service of the framework for providing the screen representation to the user interface;
wherein the user interacts with the conditional controls displayed on the user interface during execution of the application.

2. The device as claimed in claim 1, wherein the behaviour of the screen representation on the user interface is monitored by the framework for identifying user events relating to the conditional controls.

3. The device as claimed in claim 2, wherein the monitoring is performed according to predefined runtime criteria.

4. The device as claimed in claim 2 or claim 3, wherein the screen manager updates the screen model based on the user events communicated by the user interface service.

5. The device as claimed in any of claims 1 to 4, wherein the structured definition language comprises any of: XML based language; HTML; or XHTML.

6. The device as claimed in any of claims 1 to 5, wherein the conditional controls include nested layouts and user interface controls comprises any of: screen buttons; screen editboxes; screen labels; screen menu items; or screen layout types.

7. The device as claimed in any of claims 1 to 6 further comprising a code portion included with the screen components for describing the screen representation.

8. The device as claimed in claim 8 further comprising a script interpreter of the framework for executing the code portion of the screen components.

9. The device as claimed in any of claim 2, wherein the conditional controls determine their state by satisfying a predefined screen condition.

10. The device as claimed in claim 9, wherein the state comprises any of appearance; control value; visibility; or behaviour.

11. The device as claimed in claim 9 or claim 10, wherein the state of the primary control affects the state of the secondary control.

12. The device as claimed in claim 11, wherein the state of the secondary control is determined based on the state of the primary control.

13. The device as claimed in any of claims 2 to 12, wherein the states of the conditional controls are configured for change according to the user events.

14. The device as claimed in any of claim further comprising the conditional controls in the screen components being specified according to the structured definition language and /or code elements.

15. The device as claimed in claim 14, wherein the code elements are script elements.

16. The device as claimed in claim 14 or claim 15 further comprising the conditional controls in the screen components being specified such that the secondary control specifies its own state according to the code elements.

17. The device as claimed in any of claims 1 to 16 further comprising the conditional controls including a conditional layout.

18. The device as claimed in claim 17, wherein the conditional layout is configured as the primary control for the secondary control contained in the layout.

19. A method for executing a wireless application by an intelligent execution framework of a wireless device, the application having atomic screen components expressed in a structured definition language, the method comprising the steps of:
extracting the screen components from a memory, the screen components including a set of conditional controls having at least one primary control and at least one secondary control;
creating a screen model from the screen components including the conditional controls, the screen model configured for modeling a screen representation for display on a user interface of the device for providing an interactive environment between a user of the device and the application; and
generating the screen representation based on the screen model, the screen representation configured to reflect current values of user interface conditions corresponding to an execution state of the application;
wherein the user interacts with the conditional controls displayed on the user interface during execution of the application.

20. The method as claimed in claim 19 further comprising the step of monitoring the behaviour of the screen representation on the user interface by the framework for identifying user events relating to a change in the conditional controls.

21. The method as claimed in claim 19 or claim2 further comprising the step of modifying the screen model to reflect the change in the conditional controls.

22. The method as claimed in claim 21, wherein the state of the secondary control is modified according to the change of state of the coupled primary control.

23. The method as claimed in claim 21 or claim 22, wherein the modification of the screen model is directed by a code portion coupled to the changed conditional controls.

24. The method as claimed in any of claims 21 to 23, wherein the screen manager updates the screen model based on the user events communicated by the user interface service.

25. The device as claimed in any of claims 19 to 24, wherein the structured definition language is selected from the group comprising: XML based language; HTML; and XHTML.

26. The method as claimed in any of claims 19 to 25, wherein the conditional controls include nested layouts and user interface controls selected from the group comprising: screen buttons; screen editboxes; screen labels; screen menu items; and screen layout types.

27. The device as claimed in any of claims 19 to 26, wherein the conditional controls determine their state by satisfying a predefined screen condition.

28. The method as claimed in claim 27, wherein the state comprises any of appearance; control value; visibility; or behaviour.

29. The method as claimed in claim 27 or claim 28, wherein the state of the primary control affects the state of the secondary control.

30. The method as claimed in claim 29, wherein the state of the secondary control is determined based on the state of the primary control.

31. The method as claimed in any of claims 20 to 30, wherein the states of the conditional controls are configured for change according to the user events.

32. The device as claimed in any of claims 19 to 31, wherein the conditional controls in the screen components are specified according to the structured definition language and/or code elements.

33. The method as claimed in claim 32, wherein the code elements are script elements.

34. The method as claimed in claim 32 or claim 33, wherein the conditional controls in the screen components are specified such that the secondary control specifies its own state according to the code elements.

35. The method as claimed in any of claims 19 to 34 further comprising the step of including a conditional layout in the conditional controls of the screen model.

36. The method as claimed in claim 35, wherein the conditional layout is configured as the primary control for the secondary control contained in the layout.

37. A computer program product for configuring a wireless device to have an intelligent execution framework for executing a wireless application, the device having a user interface for providing an interactive environment between a user of the device and the application, the application having atomic screen components expressed in a structured definition language, the computer program product comprising:
a computer readable medium;
a screen manager module of the framework stored on the computer readable medium for generating a screen model from the screen components, the screen model configured for modeling a screen representation including a set of conditional controls having at least one primary control and at least one secondary control; and
a user interface service module stored on the computer readable medium of the framework for providing the screen representation to the user interface;
wherein the user interacts with the conditional controls displayed on the user interface during execution of the application.

38. A wireless device having an intelligent execution framework for executing a wireless application, the application having atomic screen components expressed in a structured definition language, the device comprising:
means for extracting the screen components from a memory, the screen components including a set of conditional controls having at least one primary control and at least one secondary control;
means for creating a screen model from the screen components including the conditional controls, the screen model configured for modeling a screen representation for display on a user interface of the device for providing an interactive environment between a user of the device and the application; and
means for generating the screen representation based on the screen model, the screen representation configured to reflect current values of user interface conditions corresponding to an execution state of the application;
wherein the user interacts with the conditional controls displayed on the user interface during execution of the application.
